Europäisches Patentamt

**European Patent Office**

Office européen des brevets

(11) Veröffentlichungsnummer: **0 293 671 B1**

## (12) EUROPÄISCHE PATENTSCHRIFT

(45) Veröffentlichungstag der Patentschrift: **23.10.91**　　　(51) Int. Cl.⁵: **A21C 9/04**

(21) Anmeldenummer: **88107933.9**

(22) Anmeldetag: **18.05.88**

(54) **Verteilvorrichtung zur Bildung einer dünnen Schicht auf einer Oberfläche.**

(30) Priorität: **04.06.87 CH 2128/87**

(43) Veröffentlichungstag der Anmeldung:
**07.12.88 Patentblatt 88/49**

(45) Bekanntmachung des Hinweises auf die
Patenterteilung:
**23.10.91 Patentblatt 91/43**

(84) Benannte Vertragsstaaten:
**AT BE CH DE ES FR GB IT LI LU NL SE**

(56) Entgegenhaltungen:
**BE-A- 493 939**　　　**DE-A- 1 951 489**
**DE-A- 3 131 983**　　**GB-A- 695 329**
**GB-A- 736 249**　　　**GB-A- 971 758**
**US-A- 3 489 102**　　**US-A- 3 547 052**

(73) Patentinhaber: **SOCIETE DES PRODUITS**
**NESTLE S.A.**
**Case postale 353**
**CH-1800 Vevey(CH)**

(72) Erfinder: **Ritter, Joseph**
**Waiblinger Weg 21**
**W-7146 Tamm-Hohenstange(DE)**

Rank Xerox (UK) Business Services

**Beschreibung**

Die Erfindung betrifft eine Verteilvorrichtung zur Bildung einer dünnen Schicht aus Flüssigkeit auf einer Oberfläche bestehend aus einem vertikalen Zylinder mit einer mit mehreren Düsen-Bohrungen versehenen Bodenplatte und aus einem oberhalb der Bodenplatte angeordneten Kolben zum Ausstossen der Flüssigkeit aus dem Verteilraum.

Geräte zum Aufbringen von viskosen Flüssigkeiten oder belüfteten Emulsionen auf z.B. gebackene Produkte sind schon bekannt. Das US-Patent 3,547,052 betrifft eine solche Vorrichtung, die erlaubt, eine regelmässige Verteilung einer Flüssigkeit auf einem Substrat zu erreichen. Mit einem solchen Gerät kann man mit einem Dosierkopf eine Mehrzahl von Strängen einer viskosen Flüssigkeit herstellen. Die Menge,die dabei zudosiert wird, ist ziemlich gross, so dass keine grosse Präzisionsbetrachtungen in Frage kommen.

Der Erfindung liegt die Aufgabe zugrunde, ein Gerät zu konzipieren, mit dem man sehr regelmässig und sehr gleichmässig eine kleine Menge einer Flüssigkeit auf einer Oberfläche verteilen kann. Es ist ebenfalls von Bedeutung, dass beim Aufbringen der Flüssigkeit diese sanft auf die Oberfläche fällt.

Die Erfindung betrifft eine Verteilvorrichtung gemäss Oberbegriff des Anspruchs 1, wobei

i der Kolben mit Federn versehen ist, die den Kolben in Richtung auf die Bodenplatte beaufschlagen,

ii in diesem Kolben der Zahl und der Form der Düsen-Bohrungen in der Bodenplatte entsprechende Düsennadeln angeordnet sind, die in einer oberhalb des Kolbens angeordneten Tragplatte gehalten zusammen mit dieser vertikal beweglich sind und jeweils in einer in dem Kolben vorgesehenen Bohrung beweglich geführt in die Düsen-Bohrungen der Bodenplatte hineinreichen, so daß dadurch die Düsen-Bohrungen verschlossen bzw. bei Gebrauch freigegeben werden.

Die erfindungsgemässe Vorrichtung erlaubt, eine dünne Schicht aus einer Vielzahl von Flüssigkeitstropfen zu bilden, welche gleichzeitig aus der Düsenplatte austreten und zum Beispiel auf der Oberfläche eines vorgefüllten Bechers nach dem Auftreffen ineinander fliessen. Der Becher beeinhaltet z.B. Pudding, Apfelmuss, Joghurt... und vorzugsweise die zu dosierenden Flüssigkeit ist Schokolade. Es könnte aber auch irgendeine andere Flüssigkeit sein, wie Gelee, Konfitüre, Marmelade, Alkohol, Sahne. Die zu verarbeitenden Flüssigkeiten können auch kleine Partikel, welche nicht stark zur Sedimentation neigen, enthalten.

Die Zahl der Düsen-Bohrungen in der Bodenplatte entspricht der Zahl der Düsennadeln und jede Düsennadel weist zwischen Kolben und Tragplatte eine Feder auf. Die Tragplatte bewegt sich vertikal durch eine Kolbenstange betätigt, der ein Luftzylinder zugeordnet ist. Die Funktion dieser verschiedenen Elemente, sowie die genaue Funktionierung der Vorrichtung wird unten in Verbindung mit den Zeichnungen näher erläutert.

Um eine gute Abdichtung des Verteilraumes zu gewährleisten, sind der Kolben und die Düsennadeln mit Dichtungen versehen. Das Volumen des Verteilraumes ist abhängig von der Menge, die dosiert und aufgetragen wird. Die Höhe des Verteilraumes variert vorzugsweise zwischen 0,2 und 10 mm.

Die Zahl der Düsen-Bohrungen auf der Bodenplatte und der entsprechenden Düsennadeln ist abhängig von der Viskosität der Flüssigkeit: Je höher die Viskosität, desto mehr Düsen-Bohrungen sind notwendig, um ein einwandfreies Ineinanderfliessen der einzelnen Tropfen zu erreichen. Die Zahl der Düsen-Bohrungen ist auch abhängig von der Oberflächengeometrie und variiert vorzugsweise zwischen 5 und 50.

Die erfindungsgemässe Dosiervorrichtung ist mit einem Produktbehälter und einer Dosiereinheit verbunden, deren Funktion in Verbindung mit den Zeichnungen beschrieben wird.

Mit einer Heizung im Produktbehälter, in der Dosiereinheit und in der Verteilvorrichtung ist es möglich, die Fliessbarkeit der Flüssigkeit zu verbessern, um Verstopfungen und Verschmutzung der Vorrichtung zu vermeiden.

Die Beschreibung wird untenstehend anhand der beigefügten Zeichnungen näher erläutert:

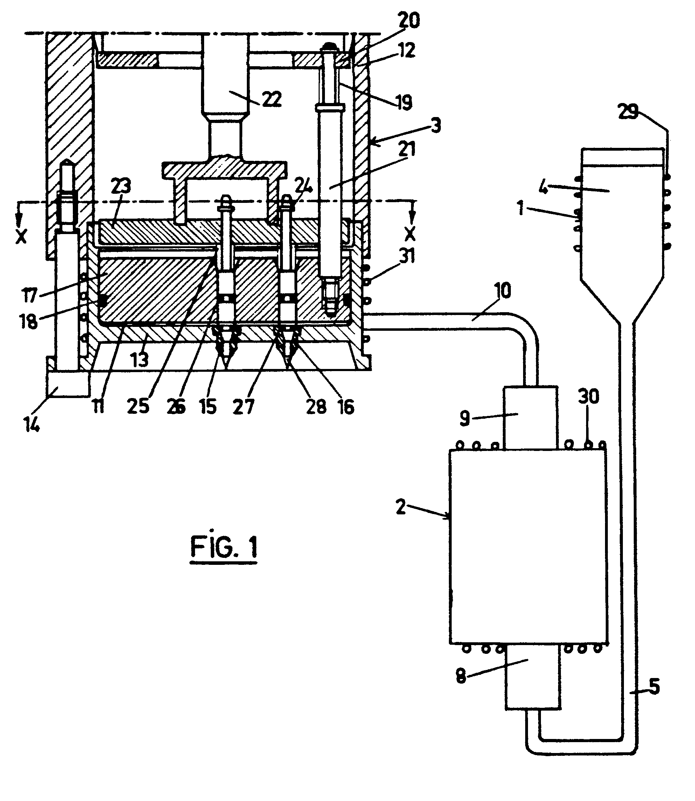

Fig. 1     zeigt einen partiellen Längsschnitt durch die Vorrichtung entlang Linie Y-Y der Fig. 2.

Fig. 2     zeigt einen Schnitt entlang Linie X-X der Fig. 1.

Die erfindungsgemässe Verteilvorrichtung (3) ist mit einem Produktbehälter (1) und einer Dosiereinheit (2) verbunden. Der Produktbehälter (1) ist mit der zu dosierenden Flüssigkeit (4) gefüllt. Das Zufuhrrohr (5) bringt diese Flüssigkeit in die Dosiereinheit (2). Diese Dosiereinheit umfasst zum Abmessen der jeweils erforderlichen Flüssigkeitsmenge einen in einem Dosierraum bewegten Kolben (nicht gezeigt). Diesem Dosierkolben sind selbsttätig arbeitende Saug - (8) und Druckventile (9) zugeordnet. Das Rohr (10) bringt dann die Flüssigkeit in den Verteilraum (11) der Dosiervorrichtung (3). Die Dosiervorrichtung besteht aus einem vertikalen Zylinder (12) und einer Bodenplatte (13), die am Zylinder mit Schrauben (14) befestigt ist. Die Bodenplatte trägt Düsen-Bohrungen oder Löcher (15), die sich in Hülsen (16) befinden, welche in die Bodenplatte eingepresst sind und unten vorstehen. Dadurch kann ein Ineinanderlaufen der austretenden Tropfen vermieden werden.

Im Verteilraum (11) befindet sich ein freibeweglicher Kolben (17), der mit Federn (19) vorgespannt und mit O-Ring (18) abgedichtet ist. Die Federn sind an einer Druck Platte (20) befestigt und die Stangen (21) verbinden die Federn (19) mit dem Kolben (17) selber.

Eine pneumatisch betätigte Kolbenstange (22) bewegt in einer Tragplatte (23) gehaltene und mit Sioherungsringen (24) versehene Düsennadeln (28). Die in dem Kolben (17) geführten Düsennadeln (28) haben einen zylindrischen Schaft mit O-Ring Abdichtung (26). Als Abschluss der Bohrungen dient ein konischer Sitz, welcher zur besseren elastischen Dichtung mit einem O-Ring (27) versehen ist. Die Düsennadeln (28) sind an der gemeinsamen Tragplatte (23) aufgehängt, welche Pneumatisch nach oben und unten bewegt wird.

Um einen gleichmässigen Anpressdruck in jedem Sitz zu bekommen, wird die Schliesskraft von der Tragplatte (23) über Federn, vorzugsweise Spiralfedern (25), übertragen.

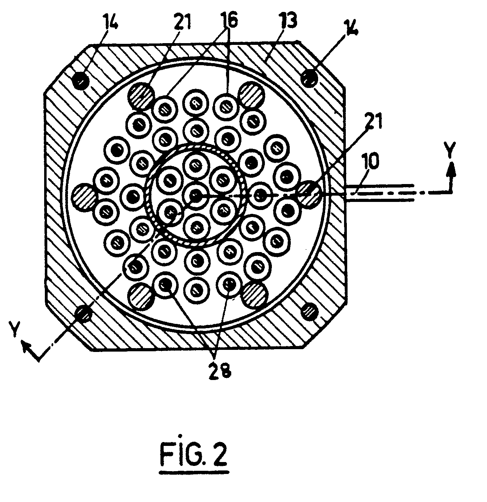

Die erfindungsgemässe Vorrichtung funktioniert wie folgt: der pneumatisch betätigte Dosierkolben hat eine stufenlos einstellbare Hublänge. Dieser Verdrängerkolben drückt die aufzubringende Flüssigkeit (4) von dem Saugventil (8) durch das Auslassventil (9) und Verbindungsrohr (10) in den Verteilraum (11) der Verteilvorrichtung (3). Der im Verteilraum befindliche Kolben (17) wird durch die einströmende Flüssigkeit hochgedrückt und erhöht die Vorspannung der Federn (19). Die Flüssigkeit verteilt sich gleichmässig im Verteilraum (11). Die Kolbenstange (22) zieht dann die Tragplatte (23) mit ihren Düsennadeln (28) nach oben und gibt die Düsen-Bohrungen (15) in der Bodenplatte (13) frei. Durch Freiwerden der Bohrungen erfolgt eine Druckentlastung des Verteilraumes (11) und der mit Federn (19) vorgespannte Kolben (17) stösst die Flüssigkeit durch die Düsen-Bohrungen (15), wo sie in Tropfenform sanft auf die zu bedeckende Oberfläche (nicht gezeigt) fällt. Die wieder nach unten in die Ausgangsstellung bewegten Nadeln (28) stossen schonend die Restflüssigkeit aus den Bohrungen. Die Hub- und Senkgeschwindigkeit der Nadeln (28) lässt sich zur Anpassung an die Beschaffenheit der Flüssigkeit verändern. In der Ausführungsform der Fig. 2 besitzt die Zylinderbodenplatte (13) 37 Löcher, und die Tragplatte (23) deswegen 37 Düsennadeln.

Die geometrische Anordnung einer Vielzahl von Düsen-Bohrungen ist abhängig von den Eigenschaften der jeweiligen Flüssigkeit und der geometrischen Form der zu beschichtenden Oberfläche.

Die erfindungsgemässe Vorrichtung ist besonders gut geeignet um eine dünne Schicht von Schokolade auf Puddings aufzutragen.

In diesem Fall, um die Schokolade immer flüssig zu behalten, sind respektiv der Produktbehälter (1), die Dosiereinheit (2) und die Verteilvorrichtung (3) mit resp. Heizungen (29, 30, 31), versehen.

Die Vorrichtung zur Herstellung einer dünnen Schicht auf einer Oberfläche integriert sich gut in eine Abfüllungslinie und arbeitet mit einer Geschwindigkeit die derjenigen der Füllvorrichtung entspricht. Diese Vorrichtung erlaubt, eine regelmässige und dünne Schicht z.B. Trennschicht herzustellen, ohne dass sich diese Schicht mit dem im Becher befindlichen Produkt mischt. Diese Vorrichtung ist zusätzlich so konzipiert, dass sie sich einfach reinigen lässt.

**Patentansprüche**

1. Verteilvorrichtung zur Bildung einer dünnen Schicht aus Flüssigkeit auf einer Oberfläche, bestehend aus einem vertikalen Zylinder (12) mit einer mit mehreren Düsen-Bohrungen (15) versehenen Bodenplatte (13) und aus einem oberhalb der Bodenplatte angeordneten Kolben (17) zum Ausstossen der Flüssigkeit aus dem Verteilraum (11), dadurch gekennzeichnet, dass

   i der Kolben (17) mit Federn (19) versehen ist, die den Kolben (17) in Richtung auf die Bodenplatte (13) beaufschlagen

   ii in diesem Kolben der Zahl und der Form der Düsen-Bohrungen in der Bodenplatte entsprechende Düsennadeln (28) angeordnet sind, die in einer oberhalb des Kolbens (17) angeordneten Tragplatte (23) gehalten zusammen mit dieser vertikal beweglich sind und jeweils in einer in dem Kolben (17) vorgesehenen Bohrung beweglich geführt in die Düsen-Bohrungen (15) der Bodenplatte (13) hineinreichen, so daß dadurch die Düsen-Bohrungen (15) verschlossen bzw. bei Bedarf freigegeben werden.

2. Verteilvorrichtung gemäss Anspruch 1, dadurch gekennzeichnet, dass jede Düsennadeln (28) zwischen Tragplatte (23) und Kolben (17) eine Feder (25) aufweist und dass die Tragplatte mit einer Kolbenstange (22) pneumatisch beweglich ist.

3. Verteilvorrichtung gemäss Ansprüche 1 oder 2, dadurch gekennzeichnet, dass der Kolben (17) und die Düsennadeln (28) zur Abdichtung des Verteilraumes (11) Dichtungen (18, 26) aufweisen.

4. Verteilvorrichtung gemäss einem der Ansprüche 1, 2 oder 3, dadurch gekennzeichnet, dass der Verteilraum (11) eine Höhe von zwischen 0,2 bis 10 mm aufweist.

5. Verteilvorrichtung gemäss Anspruch 1, dadurch gekennzeichnet, dass die Bodenplatte (13) 5 bis 50 Düsen-Bohrungen aufweist.

6. Verteilvorrichtung gemäss Anspruch 1, dadurch gekennzeichnet, dass sie eine Heizung (31) aufweist.

7. Verteilvorrichtung gemäss Anspruch 1, dadurch gekennzeichnet, dass der Kolben (17) zwischen 3 und 9 Federn aufweist.

## Claims

1. A distributor for forming a thin layer of liquid on a surface, consisting of a vertical cylinder (12) with a base plate (13) formed with several nozzle bores (15) and of a piston (17) above the base plate for ejecting the liquid from the distributing chamber (11), characterized in that
   i the piston (17) is provided with springs (19) which press the piston (17) towards the base plate (13),
   ii nozzle needles (28) corresponding in number and shape to the nozzle bores are arranged in the piston and are mounted in, and designed for vertical displacement with, a support plate (23) arranged above the piston (17), each nozzle needle being guided for displacement in a bore provided in the piston (17) and extending into the nozzle bores (15) of the base plate (13), so that the holes (15) are thus closed or opened as required.

2. A distributor as claimed in claim 1, characterized in that each nozzle needle (28) comprises a spring (25) between the support plate (23) and the piston (17) and in that the support plate is designed for pneumatic displacement by a piston rod (22).

3. A distributor as claimed in claim 1 or 2, characterized in that the piston (17) and the nozzle needles (28) have seals (18), (26) to seal the distributing chamber (11).

4. A distributor as claimed in claim 1, 2 or 3, characterized in that the distributing chamber (11) has a height of from 0.2 to 10 mm.

5. A distributor as claimed in claims 1 to 4, characterized in that the base plate (13) has five to fifty nozzle bores.

6. A distributor as claimed in claim 1, characterized in that it comprises a heating system (31).

7. A distributor as claimed in claim 1, characterized in that the piston (17) has between three and nine springs.

## Revendications

1. Dispositif de distribution pour former une mince couche de liquide sur une surface, constitué d'un cylindre (12) vertical avec une plaque de fond (13) pourvue de plusieurs perçages d'écoulement (15) et d'un piston (17), placé au-dessus de la plaque de fond, destiné à chasser le liquide de la chambre de distribution (11), caractérisé en ce que
   i le piston (17) est pourvu de ressorts (19) qui agissent sur le piston (17) en direction de la plaque de fond (13),
   ii dans ce piston sont placées des aiguilles (28), correspondant au nombre et à la forme des perçages d'écoulement dans la plaque de fond, lesquelles sont maintenues dans une plaque de support (23) placée au-dessus du piston (17), sont mobiles verticalement avec celle-ci et pénètrent dans les perçages d'écoulement (15) de la plaque de fond (13), en étant chacune mobiles dans un trou prévu dans le piston (17), ce qui fait que les perçages d'écoulement (15) sont fermés ou au besoin ouverts.

2. Dispositif de distribution selon la revendication 1, caractérisé en ce que chaque aiguille de buse (28) comporte un ressort (25) entre la plaque de support (23) et le piston (17) et en ce que la plaque de support peut se déplacer pneumatiquement avec une tige de piston (22).

3. Dispositif de distribution selon la revendication 1 ou 2, caractérisé en ce que le piston (17) et les aiguilles (28) des perçages présentent des organes d'étanchéité (18, 26) destinés à assurer l'étanchéité de la chambre de distribution (11).

4. Dispositif de distribution selon l'une des revendications 1, 2 ou 3, caractérisé en ce que la chambre de distribution (11) a une hauteur comprise entre 0,2 et 10 mm.

5. Dispositif de distribution selon la revendication 1, caractérisé en ce que la plaque de fond (13) présente 5 à 50 perçages d'écoulement.

6. Dispositif de distribution selon la revendication 1, caractérisé en ce qu'il comporte un chauffage (31).

7. Dispositif de distribution selon la revendication 1, caractérisé en ce que le piston (17) comporte entre 3 et 9 ressorts.

**FIG. 1**

## FIG. 2